# EUROPÄISCHE PATENTSCHRIFT

(11) **EP 2 383 130 B1**
(45) Veröffentlichungstag und Bekanntmachung des Hinweises auf die Patenterteilung: **31.10.2018**
(21) Anmeldenummer: 11162698.2
(22) Anmeldetag: 15.04.2011
(51) Int. Cl.: B60H 3/06, B01D 53/04

(54) **Kraftfahrzeugklimaanlage**
Motor vehicle air conditioning
Climatisation de véhicule automobile

(30) Priorität: 28.04.2010 DE 102010028293
(43) Veröffentlichungstag der Anmeldung: 02.11.2011
(73) Patentinhaber: MAHLE Behr GmbH & Co. KG, 70469 Stuttgart (DE)
(72) Erfinder: D'Angelo, Marco, 70469, Stuttgart (DE); Braitsch, Daniel, 70439, Stuttgart (DE); Englert, Peter, 74177, Bad Friedrichshall (DE); Stiehler, Daniela, 70597, Stuttgart (DE)
(74) Vertreter: Grauel, Andreas

(56) Entgegenhaltungen:
- WO-A1-98/02235
- DE-A1- 10 039 885
- DE-A1- 10 134 250
- DE-A1- 19 730 293
- DE-A1- 19 949 934
- FR-A1- 2 921 867
- US-A1- 2004 149 129

## Beschreibung

Die Erfindung betrifft eine Kraftfahrzeugklimaanlage gemäß dem Oberbegriff des Anspruches 1 und ein Verfahren zum Reinigen von Luft in einer Kraftfahrzeugklimaanlage gemäß dem Oberbegriff des Anspruches 6.

Kraftfahrzeugklimaanlagen dienen zum Kühlen und/oder zum Erwärmen der einem Fahrzeuginnenraum eines Kraftfahrzeuges zugeführten Luft. Die dem Fahrzeuginnenraum zugeführte Luft wird dabei entweder aus der Umgebung des Kraftfahrzeuges oder im Umluftbetrieb aus dem Fahrzeuginnenraum des Kraftfahrzeuges angesaugt. Die Kraftfahrzeugklimaanlagen sind dabei ferner mit einem Luftfilter zum Reinigen der dem Fahrzeuginnenraum zugeführten Luft ausgestattet. Die Luftfilter umfassen dabei im Allgemeinen einen Partikeifilter und einen Adsorptionsfilter oder mit einer Kombination beider, einem sogenannten Hybridfilter. Der Partikelfilter entfernt Staub oder Feststoffe aus der angesaugten Luft und der Adsorptionsfilter mit einem Sorptionsmaterial adsorbiert Schadstoffe, insbesondere Schadgase, z. B. Ammoniak, aus der angesaugten Luft. Der Adsorptionsfilter ist dabei erforderlich, um einen unangenehmen Geruch oder einer ansteigenden Konzentration an Schadstoffen, insbesondere an Schadgasen, im Fahrzeuginnenraum zu verhindern, Der Luftfilter ist dabei innerhalb bestimmter Wechselintervalle, z. B. alle zwei Jahre oder nach 30.000 km, auszutauschen, weil einerseits die Adsorptionskapazität des Sorptionsmaterials im Adsorptionsfilter erschöpft ist, andererseits aber der sich aus Partikeln aufbauende Filterkuchen auf dem Filter zu einem erhöhten Druckverlust führt und somit die dem Fahrzeug zugeführte Luftmenge limitiert. Häufig ist dabei aufgrund der beschränkten Adsorptionskapazität des Sorptionsmaterials in dem Adsorptionsfilter dieses bereits vor den Wechselintervallen und dem damit verbundenen Austausch des Sorptionsmaterials in der Adsorptionskapazität bereits erschöpft, so dass in den Fahrzeuginnenraum Schadstoffe, beispielsweise schwefelige Substanzen oder Ammoniak sowie organische Verbindungen, in einen größeren Umfang gelangen können. Dies führt zu einem unangenehmen Geruch und zum Verlust des Komponentenschutzes, wie dem Verdampfer. Auf dessen Oberfläche schlagen sich die Schadstoffe nieder und können dort als Nahrungsgrundlage für Mikroorganismen dienen und die Verdampferleistung negativ beeinflussen.

Als Adsorptionsfilter werden dabei im Allgemeinen mit Sorptionsmaterial beschichtete Vliesstoffe verwendet, welche plissiert in den Luftstrom gestellt sind. Die Reinigung der Luft erfolgt dabei in einer Kreuzstromadsorption. Die Filter sind dabei dicht gepackt Bei einem reinen Adsorptionsfilter ist diesen ein Partikelfilter vorgeschalten. Handelt es sich jedoch, wie zur Zeit geläufig, um einen Hybridfilter, so ist die Partikelfilterschicht direkt in den Filter integriert und bildet die erste Lage im Luftstrom. Die Durchströmung des Filterpaketes erfolgt durch eine dichte Packung an Fasern (zur Partikelreinigung) und Sorbentien, welche über Kleberfäden miteinander vernetzt sind. Diese vielen ungerichteten Strömungsab- und umlenkungen haben einen hohen Druckverlust zur Folge. Dies ist insbesondere bei Kraftfahrzeugen mit einem Elektro- oder Hybridfahrzeug von Nachteil, weil dadurch vom Gebläse ein erhöhter Energieaufwand zur Förderung der Luft durch den Luftfilter erforderlich ist.
Aus der EP 0 938 364 B1 ist eine Wärmetauschvorrichtung zur katalytischen Behandlung der Atmosphäre bekannt, um Schadstoffe, die aus der Gruppe ausgewählt werden, die aus Ozon, Kohlenwasserstoff und Kohlenmonoxid bestehen, in unschädliche Verbindung umzuwandeln.

Dokument DE 100 39 885 A offenbart eine Kraftfahrzeugklimaanlage gemäß dem Oberbegriff des Anspruchs 1. Die Aufgabe der vorliegenden Erfindung besteht deshalb darin, eine Kraftfahrzeugklimaanlage und ein Verfahren zum Reinigen von Luft in einer Kraftfahrzeugklimaanlage zur Verfügung zu stellen, bei dem aus der Luft Schadstoffe, insbesondere Schadgase, von Sorptionsmaterial in einem Luftfilter der Kraftfahrzeugklimaanlage auch über einen längeren Zeitraum mit einer hohen Adsorptionskapazität absorbiert werden können und an dem Luftfilter ein geringer Druckverlust entsteht. Die Kraftfahrzeugklimaanlage soll in der Herstellung preiswert sein zuverlässig im Betrieb arbeiten.
Diese Aufgabe wird gelöst mit einer Kraftfahrzeugklimaanlage, umfassend ein Gehäuse, ein Gebläse, einen Luftfilter zum Reinigen der dem Fahrzeuginnenraum zuzuführenden Luft, wobei der Luftfilter einen Adsorptionsfilter mit Sorptionsmaterial zur Adsorption von Schadstoffen, insbesondere Schadgasen, in der Luft umfasst, vorzugsweise einen Kältemittelverdampfer zum Kühlen einer dem Fahrzeuginnenraum zuzuführenden Luft, eine Heizeinrichtung zum Erwärmen der dem Fahrzeuginnenraum zuzuführenden Luft, wobei das Sorptionsmaterial als Beschichtung auf einer Trageinheit, insbesondere Wellrippen, angeordnet ist und/oder das Sorptionsmaterial beheizbar ist zur Desorption der adsorbierten Schadstoffe.
Insbesondere ist die Trageinheit ein Blech oder ein Kunststoff, welches vorzugsweise eine ebene oder gekrümmte Geometrie aufweist.

In einer ergänzenden Ausführungsform ist die Trageinheit ein- oder mehrteilig.

In einer Variante ist die Trageinheit steif und/oder nur mit einem hohen Kraftaufwand biegbar und/oder kein Gewebe und/oder keine Matte.

In einer weiteren Ausgestaltung besteht die Trageinheit wenigstens teilweise aus Metall, z. B. Aluminium oder Stahl, und/oder aus Kunststoff.

Die durch den Adsorptionsfilter geleitete zu reinigende Luft wird somit nicht ungerichtet durch den Adsorptionsfilter geleitet. Die definierte Durchströmung des Filterelementes und weiterhin die definierte Überströmung der Oberfläche, welche mit den Sorbentien belegt ist ermöglicht einen optimalen Gas-Feststoff-Kontakt, ohne die enorme Erhöhung des Druckverlustes, Die zu reinigende Luft strömt durch den Adsorptionsfilter durch zwischen der Trageinheit, insbesondere den Wellrippen, gebildeten kleinen Kanälen, so dass die Luft kanalisiert durch den Adsorptionsfilter strömt. Vorzugsweise wird dabei aufgrund der Geometrie der Trageinheit, insbesondere der Wellrippen und/oder Stabilisierungsbänder, eine turbulente Strömung der durch den Adsorptionsfilter geleiteten Luft erzeugt. Abweichend kann die Luft auch in einer laminaren Strömung durch den Adsorptionsfiiter geleitet werden. Durch die Kiemen auf den Wellrippen kommt es zu Mikroturbulenzen an der Oberfläche der Wellrippen. Diese Mikroturbulenzen verringern stark die Grenzschicht zwischen dem Rohgas und dem Sorbens. Dadurch ist ein schneller Übergang der Schadgase auf das Sorbens gewährleistet. Je größer die Grenzschicht ausgebildet ist, umso ausgedehnter ist der Konzentrationsgradient zwischen Rohgas und Feststoff. Ziel ist es, einen engen, stark abfallenden Gradienten zu erzeugen. Dafür sorgen die Kiemen auf den Wellrippen. Die Wellrippen entsprechen dabei vorzugsweise den aus Wärmeübertragern, beispielsweise einem Kältemittelverdampfer, bekannten Wellrippen zur Erhöhung der Oberfläche des Kältemittelverdampfers.

Insbesondere ist das Sorptionsmaterial auf einem elektrisch leitenden Material, z. B. Metall, insbesondere Aluminium, oder einem elektrisch leitfähigen Kunststoff, angeordnet, so dass durch das Material elektrischer Strom leitbar ist und dabei das Material als elektrische Widerstandsheizung fungiert und damit das Sorptionsmaterial beheizbar ist zur Desorption der adsorbierten Schadstoffe.

In einer weiteren Ausgestaltung besteht die Trageinheit, insbesondere die Wellrippe, wenigstens teilweise, insbesondere vollständig, aus dem elektrisch leitenden Material.

In einer ergänzenden Ausführungsform ist das Sorptionsmaterial mittels Bestrahlung mit elektromagnetischer Strahlung, beispielsweise Infrarot- oder UV-Strahlung oder Mikrowellen, oder mittels elektrischer Induktion beheizbar.

Vorzugsweise ist das Sorptionsmaterial auf Temperaturen von mehr als 50°C, 80°C, 120°C oder mehr beheizbar und/oder ein in dieser Schutzrechtsanmeldung beschriebenes Verfahren ist ausführbar.

In einer Variante ist das Sorptionsmaterial Aktivkohle und/oder imprägnierte Aktivkohle und/oder hydrophiles oder hydrophobes Zeolith und/oder Silikagel, weiche im Bedarfsfall auch Imprägniert sind.

Zweckmäßig sind wenigstens zwei, 50 oder hundert Wellrippen übereinander angeordnet und vorzugsweise ist zwischen den Wellrippen ein Stabilisierungsband positioniert.

In einer zusätzlichen Ausgestaltung sind die Wellrippen als Doppelwellrippen angeordnet, so dass die beiden Doppelwellfippen in einem geringen Abstand zueinander im Wesentlichen gleich ausgerichtet sind.

In einer weiteren Ausführungsform umfasst die Kraftfahrzeugklimaanlage einen Katalysator zur katalytischen Reaktion, insbesondere Umwandlung und/oder Zersetzung, von Schadstoffen in der Luft und/oder der Luftfilter weist einen Partikelfilter zur Staubfiltration auf.

Insbesondere ist der Katalysator an oder auf dem Sorptionsmaterial angeordnet. Der Katalysator besteht bevorzugt aus Titandioxid (TiO₂) in Rutil und/oder Anatas und/oder einer Mischung aus beiden Kristallformen. Weiterhin kann das TiO₂ mit mindesten einem Metall- und/oder Halbmetailelement dotiert sein. Die Partikelgröße des Katalysators beträgt vorzugsweise 20-100 nm. Die Hauptaufgaben des Katalysators sind das Erzeugen von Oberflächenhydroxyl-radikaien (HO•) und das direkte Umsetzen der Schadstoffe durch eine katalytisch unterstützte Reaktion.

In einer weiteren Ausgestaltung weist die Kraftfahreugklimaanlage eine Vorrichtung zur Erzeugung von elektromagnetischer Strahlung, insbesondere UV-Strahlung, auf zur Bestrahlung des Katalysators mit vorzugsweise UV-Strahlung im Wellenlängenbereich von mindestens 275 nm bis in den Bereich des sichtbaren Lichtes, vorzugsweise aber im Bereich von 365 - 405 nm für eine photokatalytische Reaktion der Schadstoffe am Katalysator und/oder ein in dieser Schutzrechtsanmeldung beschriebenes Verfahren ist ausführbar.

Erfindungsgemäßes Verfahren zum Reinigen von Luft in einer Kraftfahrzeugklimaanlage, insbesondere einer in dieser Schutzrechtsanmeldung beschriebenen Kraftfahrzeugklimaanlage, mit den Schritten: Fördern von Luft durch die Kraftfahrzeugklimaanlage, Leiten der geförderten Luft zu einem Adsorptionsfilter mit einem Sorptionsmaterial, Adsorption von Schadstoffen in der geförderten Luft mit dem Sorptionsmaterial, wobei die von dem Sorptionsmaterial adsorbierten Schadstoffe, insbesondere nach dem Adsorbieren, desorbiert werden.

Das Sorptionsmaterial kann somit in relativ kurzen Zeitabständen, beispielsweise nach einigen Wochen oder Monaten, desorbiert werden. Vorzugsweise werden dabei beim Desorbieren des Sorptionsmaterials wenigstens 10 %, 30 %, 50 %, 70 % oder 90 % der von dem Sorptionsmaterial adsorbierten Schadstoffe desorbiert, so dass nach der Desorption des Sorptionsmaterials im Wesentlichen keine adsorbierten Schadstoffe in dem Sorptiotismaterial mehr enthalten sind, Dadurch kann das Sorptionsmaterial nach der Desorption wieder in einem hohen Umfang eine große Menge an Schadstoffen adsorbieren. Damit ist auch über einen längeren Zeitraum, z. B. zwei bis drei Jahre, eine ausreichende Adsorptionskapazität des Adsorptionsfilters gewährleistet, weil die adsorbierten Schadstoffe in relativ kurzen Zeitabständen desorbiert werden.

In einer ergänzenden Variante wird das Sorptionsmaterial desorbiert, indem das Sorptionsmaterial erwärmt, z. B. auf Temperaturen von mehr als 50°C, 80°C oder 120°C.

In einer weiteren Variante wird das Sorptiotismaterial erwärmt indem durch das Sorptionsmaterial und/oder ein Material auf dem das Sorptionsmaterial angeordnet ist, elektrischer Strom geleitet wird und/oder das Sorptionsmaterial mit elektromagnetischer Strahlung, insbesondere Infrarot- oder UV-Strahlung öder Mikrowellen, bestrahlt wird zur Erwärmung und/oder das Sorptionsmaterial mit elektrischer Induktion erwärmt wird und/oder zu dem Sorptionsmaterial erhitzte Luft geleitet wird und die Wärme wird von der Luft zu dem Sorptionsmaterial geleitet.

In einer weiteren Ausgestaltung wird das Sorptionsmaterial desorbiert während eines Zeitraumes bei welchem keine Luft in den Fahrzeuginnenraum eingeleitet wird und/oder während der Desorption das Gebläse die Luft fördert und/oder die desorbierten Schadstoffe durch Schließen der Luftklappen zum Fahrzeuginnenraum durch den Wasserablauf des Verdampfers in die Umgebung abgeleitet werden. Die desorbierten Schadstoffe werden dabei in die Umgebung des Kraftfahrzeuges abgeleitet, so dass während der Desorption keine Schadstoffe in den Fahrzeuginnenraum des Kraftfahrzeuges gelangen.

Insbesondere wird mit einem Katalysator eine, insbesondere photokatalytische, Reaktion, insbesondere Umwandlung und/oder Zersetzung, von Schadstoffen in der Luft ausgeführt und vorzugsweise wird der Katalysator mit elektromagnetischer Strahlung, insbesondere UV-Strahlung im Bereich von 275 nm bis der gesamte sichtbare Lichtbereich, bestrahlt. Eine katalytische Reaktion der Schadstoffe ermöglicht somit neben der Adsorption der Schadstoffe am Sorptionsmaterial zusätzlich auch eine aktive Zersetzung der Schadstoffe. Dadurch kann die Reinigung der Luft in dem Luftfilter zusätzlich verbessert werden. Nicht vollständig umgesetzte Schadstoffe/Geruchsstoffe sowie HO• Radikale werden im Sorptionsmaterial gespeichert und in den Poren des Materials kann eine Weiterreaktion zwischen den Radikalen und den Zwischenprodukten erfolgen.

In einer ergänzenden Variante wird das Sorptionsmaterial in Zeitabständen von weniger als einer Woche, einem Monat oder einem Jahr regelmäßig desorbiert.

In einer zusätzlichen Ausgestaltung wird ein Katalysator, der aus einem Metall, Halbmetall bzw. Übergangsmetall besteht, erwärmt, um eine katalytische Reaktion der Schadstoffe an dem Katalysator zu ermöglichen.

In einer zusätzlichen Variante werden die Reaktionsprodukte (Zwischenprodukte und Hydroxylradikale) aus der katalytischen Reaktion der Schadstoffe von dem Sorptionsmaterial adsorbiert.

in einer weiteren Ausgestaltung sind innerhalb des Gehäuses der Kraftfahrzeugklimaanlage der Kältemittelverdampfer und die, vorzugsweise elektrische, Heizeinrichtung angeordnet.

In einer weiteren Ausführungsform ist der vorgeschaltete Partikelfilter als ein textiler Wabenkörper ausgebildet.

In einer weiteren Ausgestaltung weist die Kraftfahrzeugklimaanlage keinen Wärmeübertrager oder Wärmeaustauscher auf, welcher von einem Kühlmittel durchflossen wird zur Erwärmung der durch die Kraftfahrzeugklimaanlage geleiteten Luft.

In einer zusätzlichen Ausgestaltung ist der Heizeinrichtung ein Wärmeübertrager oder Wärmeaustauscher, welcher von einem Kühlmittel durchflossen ist.

In einer weiteren Ausgestaltung weist die Kraftfahrzeugklimaanlage wenigstens einen Kanal zum Durchleiten von Luft auf.

In einer Variante sind der Kältemittelverdampfer und/oder die Heizeinrichtung innerhalb des wenigstens einen Kanales angeordnet.

In einer ergänzenden Ausgestaltung weist die Kraftfahrzeugklimaanlage wenigstens eine Luftleiteinrichtung, z. B. wenigstens eine Luftklappe und/oder wenigstens einen Schirm und/oder wenigstens ein Rollband, auf, mittels der oder denen die durch den wenigstens einen Kanal leitbare Luftmenge steuerbar ist.

Zweckmäßig weist die Kraftfahrzeugklimaanlage eine Umluftklappe und einen Air-Quality-Sensor auf, wobei der Air-Quality-Sensor den Anteil von Kohlenmonoxid und Stickoxiden in der aus der Umgebung angesaugten Luft erfasst und bei einem Überschreiten von Grenzwerten an Kohlenmonoxid und/oder Stickoxiden ist von einer Steuerungseinheit die Umluftklappe verschließbar, so dass in den Fahrzeuginnenraum nur Luft aus dem Fahrzeuginnenraum einleitbar ist (Umluftbetrieb).

Insbesondere besteht das Gehäuse der Kraftfahrzeugklimaanlage wenigstens teilweise aus Kunststoff.

Zweckmäßig ist der wenigstens eine Kanal zum Durchleiten von Luft von einer Wandung des Gehäuses begrenzt

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage,
- Fsg. 2: eine perspektivische Ansicht eines Teils der Wellrippen eines Adsorptionsfilters in einem ersten Ausführungsbeispiel,
- Fig. 3: einen Teilquerschnitt der Wellrippen des Adsorptionsfilters in einem zweiten Ausführungsbeispiel und
- Fig. 4: eine stark vereinfachte Darstellung einer Anlage zur Herstellung des Adsorptionsfilters mit Wellrippen.

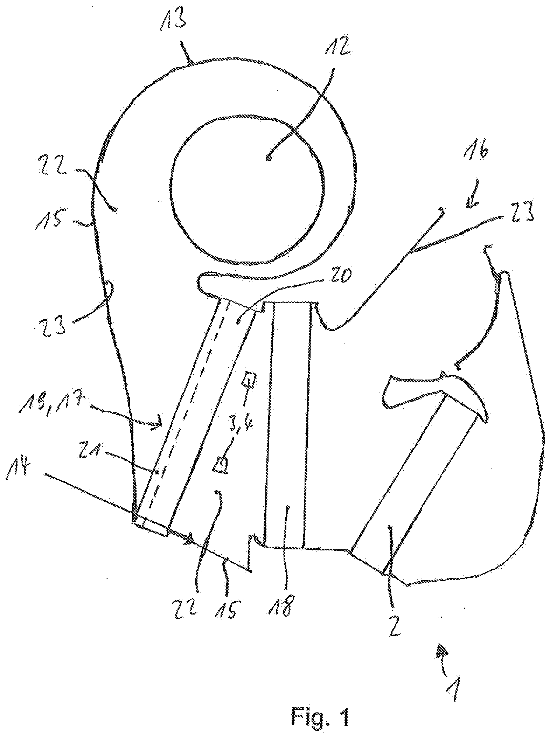

Fig. 1 zeigt eine Kraftfahrzeugklimaanlage 1. In einem ein- oder mehrteiligen Gehäuse 13 mit einer Bodenwandung 14 und einem Austrittsabschnitt 16 ist ein Gebläse 12, ein Luftfilter 17, ein Kältemittelverdampfer 18 und ein Wärmeübertrager als eine elektrische Heizeinrichtung 2 angeordnet Das Gehäuse 13 bildet somit einen Kanal 22 zum Durchleiten der Luft. Gehäusewandungen 15 des Gehäuses 13 weisen an der Innenseite eine Oberfläche 23 auf, welche den Kanal 22 begrenzen. Die Luft für den Innenraum eines Kraftfahrzeuges wird mittels des Gebläses 12 durch den Luftfilter 17, den Kältemittelverdampfer 18 sowie den Wärmeübertrager als elektrische Heizeinrichtung 2 geleitet. Der Kältemittelverdampfer 18 dient zum Kühlen der durch die Kraftfahrzeugklimaanlage 1 geleiteten Luft.

Der Luftfilter 17 ist dabei als ein Hybridfilter 19 mit einem Adsorptionsfilter 20 und einem Partikelfilter 21 ausgebildet. Im Querschnitt gemäß der Darstellung in Fig.1 durchströmt die Luft zuerst den Partikelfilter 21 und anschließend den Adsorptionsfilter 20. In Fig. 1 ist dabei durch eine strichlierte Gerade die Trennung zwischen dem Adsorptionsfilter 20 und dem Partikelfilter 21 dargestellt. Als Adsorptionsfilter 20 werden dabei Wellrippen 11 als Trageinheit 27 eingesetzt, welche mit einem Sorptionsmaterial, beispielsweise Aktivkohle oder Zeolith, beschichtet sind.

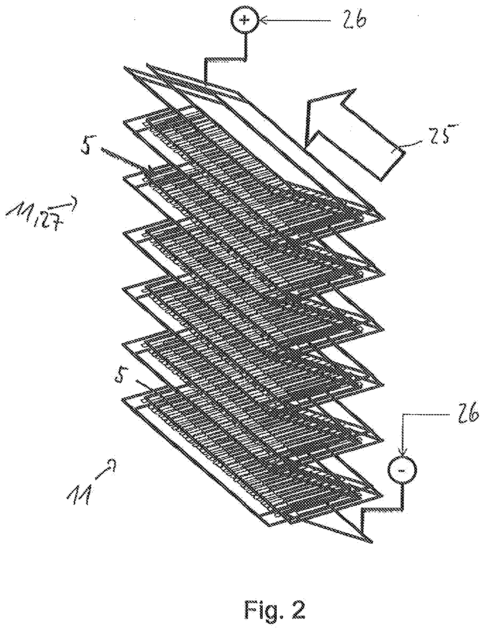

In Fig. 2 ist ein erstes Ausführungsbeispiel der Wellenrippen 11 des Adsorptionsfilters 20 in einer perspektivischen Ansicht dargestellt. Die Wellrippen 11 sind dabei als Doppelwellrippen ausgebildet, d. h. es sind zwei Wellrippen 11 in einem geringen Abstand zueinander im Wesentlichen gleich ausgerichtet angeordnet. Als Wellrippen 11 wird dabei beispielsweise ein entsprechend gefaltetes oder umgeformtes Aluminiumband eingesetzt. Zusätzlich zur Wellenform der Wellrippen 11 weisen die Wellrippen 11 auch eine strukturierte Oberfläche, beispielsweise die Ausbildung von einer Rippung 5 auf (Fig. 2). Zusätzlich oder anstelle der Rippung 5 können die Wellrippen 11 auch mit Finnen versehen sein. Damit entspricht die Ausbildung der Wellrippen 11 im Wesentlichen der Verwendung von Wellrippen 11 an Wärmeübertragern zur Erhöhung der Oberfläche von Wärmeübertragern. Die durch die Wellrippen 11 geleitete Luftströmung 25 wird dabei aufgrund der sich zwischen den Wellrippen 11 ausbildenden kleinen Kanäle mit einer turbulenten Strömung zwischen die Wellrippen 11 geleitet. Dadurch können die Schadstoffe, beispielsweise VOC (Volatile Organic Compounds), schweflige Substanzen, Ammoniak, Kohlenmonoxid oder Stickoxide, von dem Sorptionsmaterial, mit welchem die Wellrippen 11 beschichtet sind, besonders gut aufgenommen werden. Außerdem ist die Strömung somit nicht ungerichtet in dem Adsorptionsfilter 20, so dass beim Durchströmen des Adsorptionsfilters 20 mit der zu reinigenden Luft nur ein relativ geringer Druckverlust entsteht.

Das auf den Wellrippen 11 als Beschichtung angeordnete Sorptionsmaterial kann nach einer bestimmten Durchleitung von Luft mit Schadstoffen im Wesentlichen keine Schadstoffe mehr aufnehmen, weil die Adsorptionskapazität erschöpft ist. Um eine derartige Erschöpfung der Adsorptionskapazität des Sorptionsmaterials zu vermeiden, kann das Sorptionsmaterial auf den Wellrippen 11 erwärmt werden. Hierzu wird durch die Wellrippen 11 aus Aluminium mittels zweier Stromleitungen 26 durch das elektrisch leitfähige Aluminium der Wellrippen 11 Strom geleitet, so dass die Wellrippen 11 als elektrische Widerstandsheizelemente fungieren und dadurch die Wellrippen 11 auf Temperaturen beispielsweise im Bereich zwischen 100°C und 150°C erwärmt werden. Dadurch werden von dem Sorptionsmaterial die desorbierten Schadstoffe wieder abgegeben, d.h. desorbiert, und somit kann nach der Desorption das Sorptionsmaterial wieder in einem ausreichend hohen Umfang Schadstoffe adsorbieren. Während des Erwärmens der Wellrippen 11 mittels des Durchleitens von elektrischem Strom ist dabei das Gebläse 12 in einer entgegengesetzten Förderrichtung in Betrieb, so dass die Luft nicht am Austrittsabschnitt 16, welche in den Fahrzeuginnenraum führt ausströmt, sondern durch den Austrittsabschnitt 16 in das Gehäuse 13 der Kraftfahrzeugklimaanlage 1 einströmt und anschließend an die Umgebung des Kraftfahrzeuges bzw. der Kraftfahrzeugklimaanlage 1 abgeleitet wird. Dadurch gelangen während der Desorption der Schadstoffe aus dem Sorptionsmaterial keine Schadstoffe, insbesondere Schadgase, in den Fahrzeuginnenraum (nicht dargestellt).

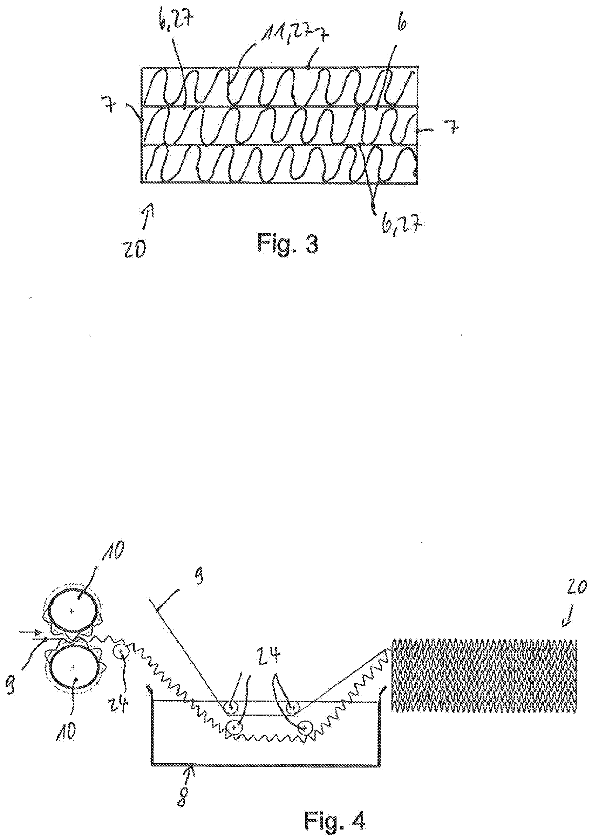

In Fig. 3 ist ein zweites Ausführungsbeispiel des Adsorptionsfilters 20 dargestellt. Die im Querschnitt wellenförmigen Wellrippen 11 sind zwischen einem Stabilisierungsband 6 angeordnet und werden außenseitig von einem Luftfilterrahmen 7 begrenzt. Da es sich in Fig. 3 nur um einen Teilquerschnitt handelt, ist am unteren Ende gemäß der Darstellung in Fig. 3 nicht der Luftfilterrahmen 7, sondern das Stabilisierungsband 6 angeordnet, weil sich hier noch weitere Wellrippen 11 mit dazwischen angeordneten Stabilisierungsbändern 6 anschließen. Zur Desorption der Schadstoffe aus dem Sorptionsmaterial, mit welchem die Wellrippen 11 und das Stabilisierungsband 6, beide als Trageinheit 27, beschichtet sind, wird der Adsorptionsfilter 20 mit einer Lampe 4 als Vorrichtung 3 zur Erzeugung elektromagnetischer Strahlung bestrahlt (Fig. 1). Als elektromagnetische Strahlung werden von der Lampe 4 beispielsweise Infrarot oder UV-Strahlung erzeugt, so dass dadurch das Sorptionsmaterial als Beschichtung auf den Wellrippen 11 und den Stabilisierungsbändern 6 auf hohe Temperaturen erwärmt werden kann. Zur Desorption wird in analoger Weise zu dem oben beschriebenen Ausführungsbeispiel das Gebläse 12 in einer entgegen der normalen Betriebsweise ausgerichteten Förderrichtung betrieben. Dabei erfolgt im Regelfall die Desorption außerhalb des Betriebes der Kraftfahrzeugklimaanlage 1, insbesondere auch während eines Stillstandes des Kraftfahrzeuges mit der Kraftfahrzeugklimaanlage 1.

Zur Herstellung eines Adsorptionsfilters 20 gemäß dem zweiten Ausführungsbeispiel in Fig. 3 wird ein Metallband 9 aus vorzugsweise Metall zwischen zwei ineinandergreifenden Zahnrädern 10 umgeformt und anschließend wird das umgeformte Metallband 9 in Wellenform sowie ein nicht umgeformtes Metallband 9 in ein Tauchbecken 8 mit dem Sorptionsmaterial eingeführt (Fig. 4). Umlenkrollen 24 lenken dabei das Metallband 9 um und an-schließend wird das Metallband 9 in Wellenform sowie das Metallband 9 ohne Wellenform, wobei das Metallband 9 ohne Wellenform ein Stabilisierungsband 6 ausbildet, zu dem Adsorptionsfilter 20 miteinander verbunden. Dabei sind eine große Anzahl von Wellrippen 11 und Stabilisierungsbände 9 abwechsein übereinander angeordnet. Der in Fig. 3 und 4 dargestellte Adsorptionsfilter 20 wird dabei senkrecht zu einer Zeichenebene von Fig. 3 und 4 von der zu reinigenden Luft durchströmt. Die Breite der Wellrippen 11 und des Stabilisierungsbandes 6, d. h. die Ausdehnung der Wellrippen 11 und/oder des Stabilisierungsbandes 6 senkrecht zu der Zeichenebene von Fig. 3 und 4, liegt dabei im Bereich zwischen 10 mm und 100 mm und beträgt vorzugsweise 30 mm und/oder 40 mm. Die Breite des Adsorptionsfilters 20 gemäß der Darstellung in Fig. 3 bzw. 4 liegt dabei im Bereich zwischen 100 mm und 500 mm und beträgt dabei vorzugsweise ungefähr 200 mm, Die Höhe des Adsorptionsfilters 20 gemäß der Darstellung in Fig. 3 und 4 liegt dabei beispielsweise im Bereich zwischen 100 mm und 500 mm und beträgt vorzugsweise im Wesentlichen 250 mm. Nach dem derartigen Übereinanderordnen der Stabilisierungsbänder 6 und der Wellrippen 11 werden diese von dem Luftfilterrahmen 7 vollständig umschlossen. Die mit dem Sorptionsmaterial beschichteten Wellrippen 11 bzw. Stabilisierungsbänder 6 können somit in einem großen Umfang Schadstoffe adsorbieren.

Ergänzend hierzu kann auf dem Sorptionsmaterial zusätzlich an der Oberfläche ein Katalysator aufgebracht sein. Mittels des Katalysators können die Schadstoffe, insbesondere Schadgase oder Geruchsstoffe, nicht nur vom Sorptionsmaterial adsorbiert und gespeichert, sondern auch aktiv zersetzt werden. Als Katalysatoren werden beispielsweise Metalle oder Metalloxide eingesetzt und die Katalyse erfolgt dabei photokatalytisch. Zur Aktivierung des Katalysators werden somit die Katalysatoren mit elektromagnetischer Strahlung im UV-Bereich, beispielsweise zwischen 200 und 400 nm bestrahlt und somit die katalytische Reaktion und damit Zersetzung der Schadstoffe ermöglicht. Als Katalysator wird beispielsweise Titandioxid oder eine Titandioxidmischung eingesetzt. Der Katalysator wird dabei beispielsweise als Nanopartikel mit einer Größe von 30 bis 100 nm auf dem Sorptionsmaterial aus Aktivkohle mit einer Partikelgröße im Bereich von ungefähr 3 bis 50 µm eingesetzt. Die Partikel des Katalysators sind damit wesentlich kleiner als die Partikel des Sorptionsmaterials, so dass sich die Partikel des Katalysators zwischen den Partikeln des Sorptionsmaterials an der Oberfläche des Sorptionsmaterials anlagern. Die bei der Katalyse erzeugten Reaktionsstoffe können entweder von der durchleiten Luft mittransportiert werden, sofern diese Reaktionsstoffe für die Fahrzeuginsassen nicht schädlich sind und/oder die Reaktionsstoffe werden von dem Sorptionsmaterial adsorbiert, sofern die Reaktionsstoffe aus der Katalyse für die Fahrzeuginsassen schädlich sind.

Abweichend von der Anordnung des Katalysators auf dem Sorptionsmaterial kann der Katalysator auch auf einem anderen Trägermaterial bzw. einem besonderen Bauteil für den Katalysator angeordnet oder beschichtet sein. Aufgrund der katalytischen Zersetzung der Schad- und Geruchsstoffe kann somit zusätzlich das Reinigungsvermögen der Kraftfahrzeugklimaanlage 1 verbessert werden. Die in Fig. 1 dargestellte Vorrichtung 3 zur Erzeugung von elektromagnetischer Strahlung kann dabei vorzugsweise nicht nur zum Erwärmen des Sorptionsmaterials und damit zur Desorption von Schadstoffen aus dem Sorptionsmaterial, sondern auch zur Erzeugung von elektromagnetischer Strahlung zur photokatalytischen Aktivierung der Katalysatoren bzw, des Katalysators eingesetzt werden.

Insgesamt betrachtet sind mit der erfindungsgemäßen Kraftfahrzeugklimaanlage 1 wesentliche Vorteile verbunden.

Aufgrund der Verwendung von mit Sorptionsmaterial beschichteten Wellrippen 11 an dem Adsorptionsfilter 20 wird nur ein sehr geringer Druckverlust erzeugt, so dass zum Betrieb des Gebläses 12 nur wenig elektrische Energie aufgewendet werden muss.

Ferner wird das Sorptionsmaterial aktiv innerhalb geringer Zeitintervalle desorbiert, so dass dadurch auch während längerer Betriebszeiten ohne Austausch des Adsorptionisfilters 20 ein hohes Adsorptionsvermögen des Adsorptionsfilters 20 gewährleistet ist.

### Bezugszeichenliste

- 1: Kraftfahrzeugklimaanlage
- 2: Heizeinrichtung
- 3: Vorrichtung zur Erzeugung elektromagnetischer Strahlung
- 4: Lampe
- 5: Rippung an Wellrippen
- 6: Stabilisierungsband
- 7: Luftfilterrahmen
- 8: Tauchbecken mit Sorptionsmaterial
- 9: Metallband
- 10: Zahnrad
- 11: Wellrippe
- 12: Gebläse
- 13: Gehäuse
- 14: Bodenwandung
- 15: Gehäusewandung
- 16: Austrittsabschnitt
- 17: Luftfilter
- 18: Kältemittelverdampfer
- 19: Hybridfilter
- 20: Adsorptionsfilter
- 21: Partikelfilter
- 22: Kanal
- 23: Oberfläche
- 24: Umlenkrolle
- 25: Luftströmung
- 26: Stromleitung
- 27: Trageinheit

## Patentansprüche

1. Kraftfahrzeugklimaanlage (1), umfassend
- ein Gehäuse (13),
- ein Gebläse (12),
- einen Luftfilter (17) zum Reinigen der dem Fahrzeuginnenraum zuzuführenden Luft, wobei der Luftfilter (17) einen Adsorptionsfilter (20) mit Sorptionsmaterial zur Adsorption von Schadgasen in der Luft umfasst,
- einen Kältemittelverdampfer (18) zum Kühlen einer dem Fahrzeuginnenraum zuzuführenden Luft,
- eine Heizeinrichtung (2) zum Erwärmen der dem Fahrzeuginnenraum zuzuführenden Luft,
**dadurch gekennzeichnet, dass**
das Sorptionsmaterial als Beschichtung auf einer Trageinheit (27), die als Wellrippe (11) ausgebildet ist, angeordnet ist und das Sorptionsmaterial beheizbar ist zur Desorption der adsorbierten Schadstoffe.

2. Kraftfahrzeugklimaanlage nach Anspruch 1, **dadurch gekennzeichnet, dass** das Sorptionsmaterial auf einem elektrisch leitenden Material, z. B. Metall, insbesondere Aluminium, oder einem elektrisch leitfähigen Kunststoff, angeordnet ist, so dass durch das Material elektrischer Strom leitbar ist und dabei das Material als elektrische Widerstandsheizung fungiert und damit das Sorptionsmaterial beheizbar ist zur Desorption der adsorbierten Schadstoffe.

3. Kraftfahrzeugklimaanlage nach Anspruch 1 oder 2, **dadurch gekennzeichnet, dass** Trageinheit (27), insbesondere die Wellrippe (11), wenigstens teilweise, insbesondere vollständig, aus dem elektrisch leitenden Material besteht.

4. Kraftfahrzeugklimaanlage nach einem oder mehreren der vorhergehenden Ansprüche, **dadurch gekennzeichnet, dass** das Sorptionsmaterial mittels Bestrahlung mit elektromagnetischer Strahlung, beispielsweise Infrarot- oder UV-Strahlung oder Mikrowellen, oder mittels elektrischer Induktion beheizbar ist.

5. Kraftfahrzeugklimaanlage nach einem oder mehreren der vorhergehenden Ansprüche, **dadurch gekennzeichnet, dass** das Sorptionsmaterial auf Temperaturen von mehr als 50°C, 80°C oder 120°C beheizbar ist und/oder ein Verfahren gemäß einem oder mehrerer der Ansprüche 6 bis 10 ausführbar ist.

6. Verfahren zum Reinigen von Luft in einer Kraftfahrzeugklimaanlage (1) gemäß einem der vorhergehenden Ansprüche, mit den Schritten:
- Fördern von Luft durch die Kraftfahrzeugklimaanlage (1),
- Leiten der geförderten Luft zu einem Adsorptionsfilter (20) mit einem Sorptionsmaterial,
- Adsorption von Schadstoffen in der geförderten Luft mit dem Sorptionsmaterial,
**dadurch gekennzeichnet, dass**
die von dem Sorptionsmaterial adsorbierten Schadstoffe, insbesondere nach dem Adsorbieren, desorbiert werden.

7. Verfahren nach Anspruch 6, **dadurch gekennzeichnet, dass** das Sorptionsmaterial desorbiert wird, indem das Sorptionsmaterial erwärmt wird, z. B. auf Temperaturen von mehr als 50°C, 80°C oder 120°C.

8. Verfahren nach Anspruch 7, **dadurch gekennzeichnet, dass** das Sorptionsmaterial erwärmt wird, indem durch das Sorptionsmaterial und/oder ein Material auf dem das Sorptionsmaterial angeordnet ist, elektrischer Strom geleitet wird und/oder das Sorptionsmaterial mit elektromagnetischer Strahlung, insbesondere Infrarot- oder UV-Strahlung oder Mikrowellen, bestrahlt wird zur Erwärmung und/oder das Sorptionsmaterial mit elektrischer Induktion erwärmt wird und/oder zu dem Sorptionsmaterial erhitzte Luft geleitet wird und die Wärme von der Luft zu dem Sorptionsmaterial geleitet wird.

9. Verfahren nach einem der Ansprüche 6 bis 8, **dadurch gekennzeichnet, dass** das Sorptionsmaterial desorbiert wird während eines Zeitraumes bei welchem keine Luft in den Fahrzeuginnenraum eingeleitet wird und/oder während der Desorption das Gebläse (12) die Luft in einer entgegensetzten Förderrichtung zur Förderung von Luft in den Fahrzeuginnenraum fördert und/oder die desorbierten Schadstoffe in die Umgebung abgeleitet werden.

10. Verfahren nach einem der Ansprüche 6 bis 9, **dadurch gekennzeichnet, dass** mit einem Katalysator eine, insbesondere photokatalytische, Reaktion, insbesondere Umwandlung und/oder Zersetzung, von Schadstoffen in der Luft ausgeführt wird und vorzugsweise der Katalysator mit elektromagnetischer Strahlung, insbesondere UV-Strahlung, bestrahlt wird.

## Claims

1. A motor vehicle air-conditioning system (1), comprising
- a housing (13),
- a fan (12),
- an air filter (17) for cleaning the air to be delivered to the vehicle interior, wherein the air filter (17) comprises an adsorption filter (20) with sorption material for adsorbing noxious gases in the air,
- a refrigerant evaporator (18) for cooling air to be delivered to the vehicle interior,
- a heater (2) for heating the air to be delivered to the vehicle interior,
**characterised in that**
the sorption material is arranged as a coating on a support unit (27) which is designed as a corrugated rib (11) and the sorption material can be heated in order to desorb the adsorbed contaminants.

2. The motor vehicle air-conditioning system according to claim 1, **characterised in that** the sorption material is arranged on an electrically conductive material, e.g. metal, in particular aluminium, or an electrically conductive plastic, so that electrical current can be conducted through the material and in the process, the material acts as an electric resistance heater and the sorption material can thus be heated in order to desorb the adsorbed contaminants.

3. The motor vehicle air-conditioning system according to claim 1 or 2, **characterised in that** the support unit (27), in particular the corrugated rib (11), consists at least partially, in particular completely, of the electrically conductive material.

4. The motor vehicle air-conditioning system according to one or more of the preceding claims, **characterised in that** the sorption material can be heated by means of irradiation with electromagnetic radiation, for example infrared or UV radiation or microwaves, or by means of electric induction.

5. The motor vehicle air-conditioning system according to one or more of the preceding claims, **characterised in that** the sorption material can be heated to temperatures of more than 50°C, 80°C or 120°C and/or a method according to one or more of claims 6 to 10 can be carried out.

6. A method for cleaning air in a motor vehicle air-conditioning system (1) according to one of the preceding claims, with the following steps:
- conveying air through the motor vehicle air-conditioning system (1),
- conducting the conveyed air to an adsorption filter (20) with a sorption material,
- adsorbing contaminants in the conveyed air with the sorption material,
**characterised in that**
the contaminants adsorbed by the sorption material are desorbed, in particular after the adsorption.

7. The method according to claim 6, **characterised in that** the sorption material is desorbed by heating the sorption material, e.g. to temperatures of more than 50°C, 80°C or 120°C.

8. The method according to claim 7, **characterised in that** the sorption material is heated by conducting electric current through the sorption material and/or a material on which the sorption material is arranged, and/or the sorption material is irradiated with electromagnetic radiation, in particular infrared or UV radiation or microwaves, in order to be heated, and/or the sorption material is heated by electric induction and/or heated air is conducted to the sorption material and the heat is conducted from the air to the sorption material.

9. The method according to one of claims 6 to 8, **characterised in that** the sorption material is desorbed during a time period in which no air is introduced into the vehicle interior and/or the fan (12), during the desorption, conveys the air in a opposite conveyance direction in order to convey air into the vehicle interior and/or the desorbed contaminants are discharged into the environment.

10. The method according to one of claims 6 to 9, **characterised in that** a reaction, in particular a photocatalytic reaction, in particular conversion and/or decomposition, of contaminants is carried out in the air by means of a catalyst and preferably the catalyst is irradiated with electromagnetic radiation, in particular UV radiation.

## Revendications

1. Système de climatisation (1) d'un véhicule automobile, comprenant :
- un carter (13),
- un pulseur (12),
- un filtre à air (17) servant à purifier l'air à fournir à l'habitacle du véhicule, où le filtre à air (17) comprend un filtre d'adsorption (20) comportant un matériau à sorption pour l'adsorption de gaz toxiques contenus dans l'air,
- un évaporateur de fluide frigorigène (18) servant au refroidissement d'un air à fournir à l'habitacle du véhicule,
- un dispositif de chauffage (2) servant à chauffer l'air à fournir à l'habitacle du véhicule,
**caractérisé en ce que** le matériau à sorption est disposé comme un revêtement sur un ensemble support (27) qui est configuré comme une ailette ondulée (11), et le matériau à sorption peut être chauffé pour la désorption des polluants adsorbés.

2. Système de climatisation d'un véhicule automobile selon la revendication 1, **caractérisé en ce que** le matériau à sorption est disposé sur un matériau électroconducteur, par exemple du métal, en particulier de l'aluminium, ou bien sur une matière plastique à conductivité électrique, de sorte qu'un courant électrique peut passer à travers le matériau et, ainsi, le matériau fonctionne comme chauffage à résistance électrique et, par conséquent, le matériau à sorption peut être chauffé pour la désorption des polluants adsorbés.

3. Système de climatisation d'un véhicule automobile selon la revendication 1 ou 2, **caractérisé en ce que** l'ensemble support (27), en particulier l'ailette ondulée (11), se compose au moins en partie, en particulier en totalité, du matériau électroconducteur.

4. Système de climatisation d'un véhicule automobile selon l'une quelconque ou plusieurs des revendications précédentes, **caractérisé en ce que** le matériau à sorption peut être chauffé par irradiation avec un rayonnement électromagnétique, par exemple un rayonnement infrarouge ou ultraviolet ou des micro-ondes, ou bien par induction électrique.

5. Système de climatisation d'un véhicule automobile selon l'une quelconque ou plusieurs des revendications précédentes, **caractérisé en ce que** le matériau à sorption peut être chauffé à des températures de plus de 50°C, de 80°C ou de 120C° et / ou un procédé peut être mis en oeuvre selon l'une quelconque ou plusieurs des revendications 6 à 10.

6. Procédé de purification de l'air dans un système de climatisation (1) d'un véhicule automobile selon l'une quelconque des revendications précédentes, ledit procédé comprenant les étapes consistant :
- à faire circuler de l'air à travers le système de climatisation (1) d'un véhicule automobile,
- à diriger l'air en circulation jusqu'à un filtre d'adsorption (20) comprenant un matériau à sorption,
- à procéder à l'adsorption, avec le matériau à sorption, de polluants contenus dans l'air en circulation,
**caractérisé en ce que** les polluants adsorbés par le matériau à sorption sont désorbés, en particulier après l'adsorption.

7. Procédé selon la revendication 6, **caractérisé en ce que** le matériau à sorption est désorbé, tandis que le matériau à sorption est chauffé, par exemple à des températures de plus de 50°C, de 80°C ou de 120°C.

8. Procédé selon la revendication 7, **caractérisé en ce que** le matériau à sorption est chauffé, tandis qu'un courant électrique est dirigé à travers le matériau à sorption et / ou à travers un matériau sur lequel le matériau à sorption est disposé et / ou le matériau à sorption est irradié pour le chauffage, ladite irradiation se produisant par rayonnement électromagnétique, en particulier par rayonnement infrarouge ou ultraviolet ou par des micro-ondes, et / ou le matériau à sorption est chauffé par induction électrique et / ou de l'air chauffé est dirigé jusqu'au matériau à sorption, et la chaleur de l'air est dirigée jusqu'au matériau à sorption.

9. Procédé selon l'une quelconque des revendications 6 à 8, **caractérisé en ce que** le matériau à sorption est désorbé au cours d'un laps de temps pendant lequel aucune quantité d'air n'est introduite dans l'habitacle du véhicule et / ou pendant la désorption le pulseur (12) fait circuler l'air dans une direction opposée à celle de la circulation de l'air dans l'habitacle du véhicule et / ou les polluants désorbés sont évacués dans le milieu environnant.

10. Procédé selon l'une quelconque des revendications 6 à 9, **caractérisé en ce qu'**une réaction, en particulier photocatalytique, en particulier une transformation et / ou une décomposition de polluants contenus dans l'air est réalisée avec un catalyseur et, de préférence, le catalyseur est irradié par rayonnement électromagnétique, en particulier par rayonnement ultraviolet.
